(19) Europäisches Patentamt
European Patent Office
Office européen des brevets

(11) Publication number: **0 128 678**
**A1**

# (12) EUROPEAN PATENT APPLICATION

(21) Application number: **84303318.4**

(22) Date of filing: **16.05.84**

(51) Int. Cl.³: **C 03 C 25/02**

(30) Priority: **10.06.83 US 502969**

(43) Date of publication of application: **19.12.84**
**Bulletin 84/51**

(84) Designated Contracting States: **AT BE CH DE FR GB IT LI LU NL SE**

(71) Applicant: **Aetna Telecommunications Laboratories, 131 Flanders Road, Westboro Massachusetts 01581 (US)**

(72) Inventor: **Nath, Dilip K., 4 Cavatorta Drive, Framingham Massachusetts 01701 (US)**
Inventor: **Elion, Glenn R., 250 Crawford Street P.O. Box 611, Northborough Massachusetts 01532 (US)**

(74) Representative: **Arthur, Bryan Edward et al, Withers & Rogers 4 Dyer's Buildings Holborn, London EC1N 2JT (GB)**

## (54) Hermetic coating of optical fiber.

(57) A pyrolytic process for manufacturing an optical fiber having an hermetic coating of high purity titanium dioxide. The coating is applied at the drawn fiber stage wherein the coating hermetically seals the fiber against penetration of environmental gases and fluids, especially $H_2O$ molecules. The coating is formed by a pyrolytic reaction, in which titanium esters are reacted to form a film of titanium dioxide on the fiber surface. The coating is of a thickness selectable according to reaction parameters. The fiber may be then coated by buffer and protective coatings to form a finished, hermetically coated glass fiber with improved hardness and superior strength providing improved resistance to abrasion and breakage.

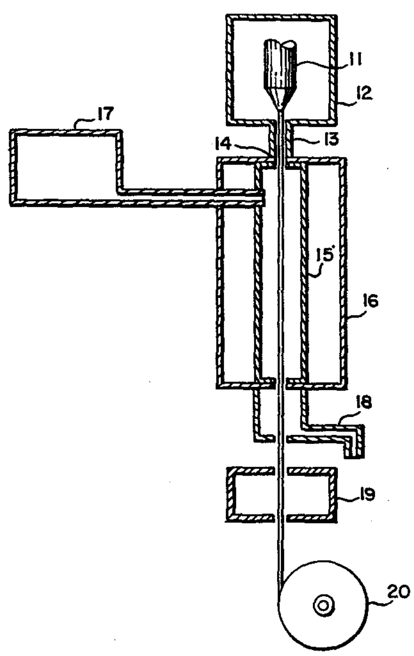


**EP 0 128 678 A1**

## FIELD OF THE INVENTION

The present invention relates to optical fibers, and more particularly to optical fibers having protective oxide coatings.

## BACKGROUND OF THE INVENTION

Optical fibers used in communication must withstand stresses of hostile environments such as extreme temperature and pressure. In such environments, the optical fibers must exhibit high reliability and strength over a long lifetime.

Various coatings are presently used to increase the durability of the optical fibers. Among these coatings are metals such as aluminum, indium, tin, gold, tungsten, titanium, zirconium, molybdemum, and metal alloys. Such metal coatings however, have the undesirable properties of conducting both heat and electricity and do not provide adequate long-term protection against hostile environment, such as those in underground and underwater application.

Plastic coatings including kevlar, teflon, ultra-violet setting epoxies, lacquers, and nylon have also been used for optical fiber coatings. Such plastics alone are inadequate for protection against water penetration, which accelerates optical fiber deterioration, under conditions of high pressure or temperature.

Ceramic coatings have also been proposed for optical fibers, particularly to improve fiber tensile strength. However, ceramic coatings often possesses expansion coefficients which are different from those of the fiber and cause initial strength degradation.

Additional problems occur when the adhesion between the fiber coatings and subsequently applied plastic buffers becomes reduced, regardless of the subsequent coatings are applied over ceramic metallic or non-metallic coatings. This low adhesion will eventually lead to the creation of pockets or bubbles between the coated fiber and the buffer where the adhesion has been lost. The result increases

the possibility of corrosive or deleterious agents affecting the performance or the cable.

More recently, titanium dioxide has been shown to be an advantageous hermetic optical fiber coating.

## SUMMARY OF THE INVENTION

According to the present invention, a pyrolytic process is provided for coating an optical fiber with an hermetic layer of high purity titanium dioxide, applied to a drawn fiber, to substantially increase the durability of the drawn fiber against attack by environmental substances, even under conditions of high temperature and pressure. The process for providing such a coated fiber starts with a fully formed optical preform or mandrel from which the ultimate fiber is created in a drawing furnace. The fiber is drawn from the preform and passed directly into a controlled atmosphere without exposure to the outside air. In the controlled atmosphere, a pyrolytic reaction is supported wherein titanium esters form a coating of high purity titanium dioxide on the surface of the fiber.

The fiber is coated during a predetermined interval of time depending on the thickness of coating desired, which thickness may typically range from nanometers to millimeters. Once coated, the fiber leaves the controlled environment, and may be subsequently coated by conventional polymer or other layers. One or more additional polymer coatings may be used, the process including thermal or ultraviolet curing. The resulting polymer coated fibers are finally wound on a spool.

## BRIEF DESCRIPTION OF THE DRAWING

These and other features of the present invention are more fully set forth below in the solely exemplary detailed description and accompanying drawing of which:

Fig. 1 is a diagram illustrating the on-line fiber coating in accordance with the present invention; and

Figs. 2A-2C perspectively illustrate stages of optical fiber formation from preform to buffered fiber according to the present invention.

## DETAILED DESCRIPTION OF THE INVENTION

The present invention contemplates an improved process for producing optical fibers with increased resistance to environmental attack and improved strength, as well as to the fibers produced by the process.

In accordance with the invention, the improved fibers are produced by the process illustrated in Fig. 1, beginning with a fiber preform 11. The fiber preform 11 (also shown as 11 in Fig. 2A), represents a cylinder of glass having dimensions which may typically range from 10 to 40 mm in diameter and 500 to 2000 mm in length. The preform 11 is a complete glass cylinder suitable for drawing within a fiber optic drawing furnace 12 into the final dimensions of an optical fiber which, after provision of suitable coatings or encasings, becomes a fiber optic cable adapted to transmit vast numbers of channels of information modulated light. The preform 11 is typically a body of glass to which one or more dopant materials have been added in order to achieve a desired optical property for transmission of information modulated light. As shown in Fig. 2A, the preform 11 also includes a central core portion section 24 having a higher index of refraction than a peripheral cladding 26.

Again referring to Fig. 1, the method according to the present invention includes drawing preform 11 from a furnace 12 which has an ultraclean atmosphere. The fiber 13 shown in Fig. 2B, is drawn at the neckdown region of the preform 11 and is passed through a controlled atmosphere chamber 14 in order to avoid any contamination (including $H_2O$) from the ambient environment. After

passing through chamber 14, fiber 13 enters into a reactor 15 which is connected to the chamber 14. The reactor 15 is heated by a furnace 16 to a temperature of one or more zones which is required to carry on the chemical conversion of the particular precursors to titanium dioxide. A chemical delivery system 17 comprises scrubbers and bubblers to clean and transport vapors of titanium esters such as tetraisopropyl titanate or tetrabutyl titanate by a non-reactive carrier gas such as nitrogen, hydrogen, oxygen or other suitable gases. In the case of higher esters such as tetrastearyl titanate, the chemical delivery system 17 includes nebulizers. The chemical delivery system 17 is not restricted to the present examples and can be modified to any suitable form to deliver precursors at controlled rates to the reactor 15 where they react to form titanium dioxide according to the exemplary pyrolytic reactions described below.

$$Ti(OC_3H_7)_4 \rightarrow TiO_2 + 2C_3H_6 + 2C_3H_8O \quad (1)$$

$$Ti(OC_4H_9)_4 \rightarrow TiO_2 + 2C_4H_8 + 2C_4H_{10}O \quad (2)$$

Other reactions for different esters may be used.

The chemical nature of the precursors is not restricted to the titanium esters but also include their derivates which can be formed by alcoholysis, acidolysis, chlorolysis or similar conventional reactions which substitute the alkyl groups of the titanium esters.

The reaction temperature is adjusted to the requirment of the particular reaction. For example, tetraisopropyl titanite can be pyrolitically decomposed to titanium dioxide, preferably at a temperature of 400°C. The tetrabutyl titanate is heated to 450°C to form the coating on the glass fiber. The atmosphere for the reactor 15 is carefully controlled by conventional means using purge gases, not shown in Fig. 1. The reactor 15 is kept clean by exerting a lower atmospheric

pressure through port 18 to form an exhaust port which is connected to a chemical scrubber system, not shown.

After passing through reactor 15, the fiber becomes hermetically coated with a thin, clear amorphous film of titanium dioxide. The thickness of the film can vary from several angstroms to tens of thousands of angstroms depending on the process parameters, such as the concentration and volumetric flow rates of the chemicals, temperature of reactor and fiber drawing speed. The thin film of the present invention has the unique characteristic in that, unlike a metal or silicon nitride type of inorganic coating, the high purity titanium dioxide is very compatable with silicon dioxide in many physical and chemical properties. An important example is their similar thermal coefficient of expansion, and the relatively superior adhesion of titanium dioxide film to silicon glass fibers, as compared to conventional coating elements. In addition to these properties, the amorphous $TiO_2$ film forms a compressive layer on silica glass, resulting in an incrêase in strength by 50% or more.

After being hermetically coated, the fiber 13 of Fig. 1 passes through a conventional polymer coating chamber 19 resulting in the fiber 30 of Fig. 2C. One or several polymer coatings 32 with one or more polymer coating operations may be used, wherein the curing process includes thermal or ultra-violet radiation. The polymer coating processes are known, and not discussed here. Thereafter, the fiber 13 is finally wound on a spool 20.

Typical examples of fiber coating steps in accordance with the present invention are illustrated below:

<u>Example 1</u>

A nitrogen gas is passed through a bubbler containing tetraisopropyl titanate at a flow rate of 2,000 ml/minute and fed into the reactor 15 of Fig. 1. The

temperature inside the reactor 15 is maintained at 400°C. The reactor 15 is connected to the exhaust port 18 so that a constant flow of gases is maintained during the passage of fiber 13 through the reactor. After leaving the reactor 15, the fiber 13 is coated with one or more polymers.

Example 2

The reactant gas in example 1 is replaced by tetrabutyl titanate. The temperature inside the reactor is maintained at 450°C.

The above-described process and resulting product achieve an enhancement in optical fibers by increasing their tensile strength by 50% or more and raising their environmental immunity. The benefits of this invention may be achieved by other specific ways within the scope of the invention, as specified in the following claims.

# CLAIMS

1. A process for providing a coated optical fiber comprising:

providing a glass preform of a type adapted to be drawn into an optical fiber;

drawing the preform into the dimensions of an optical fiber; and

pyrolytically decomposing a titanium ester or derivative thereof in the presence of said optical fiber immediately after drawing said fiber to form a titanium dioxide coating thereon.

2. The process of claim 1, wherein the step of pyrolytically decomposing includes limiting $H_2O$ in the environment of the drawn fiber.

3. The process of claim 2, wherein said step of pyrolytically decomposing includes the step of leading the fiber through a multizone reaction chamber.

4. The process of claim 3, further including applying a non-reactive carrier gas to transport said titanium ester to said drawn optical fiber.

5. The process of claim 4, further including the step of controlling the feed rate of said carrier gas.

6. The process of claim 5, further including the step of scrubbing said carrier gas prior to the application thereof to said optical fiber.

7. The process of claim 1, performed according to equation (1).

8. The process of claim 1, performed according to equation (2).

9. The process of claim 1, wherein the step of pyrolytically reacting includes pyrolytically decomposing tetraisopropyl titanate at a temperature at or near 400°C.

10. The process of claim 1, wherein the step of pyrolytically reacting includes the step of reacting tetrabutyl titanate at a temperature at or near 450°C.

11. An optical fiber having a high purity titanium dioxide coating produced according to the process comprising:

providing a glass preform of a type adapted to be drawn into an optical fiber;

drawing the preform into the dimensions of an optical fiber; and

coating said optical fiber immediately after drawing with a pyrolytically decomposed titanium ester compound or derivative thereof to form a titanium dioxide coating thereon.

12. The product of claim 11, wherein the process includes the step of limiting $H_2O$ in the environment of the drawn fiber coating.

13. The product of claim 12, wherein the process includes the step of leading the fiber through a multizone reaction chamber.

14. The product of claim 13, wherein the process includes the step of applying a non-reactive carrier gas to transport said titanium ester to said drawn optical fiber.

15. The product of claim 14, wherein the process includes the step of controlling the feed rate of said carrier gas.

16. The product of claim 15, wherein the process includes the step of scrubbing said carrier gas prior to the application thereof to said optical fiber.

17. The product of claim 11, wherein the process includes the step of performing the process according to equation (1).

18. The product of claim 11, wherein the process includes the step of performing the reaction according to equation (2).

19. The product of claim 11, wherein the process includes the step of pyrolytically decomposing tetraisopropyl titanate in a reaction chamber having a temperature at or near 400°C.

20. The product of claim 11, wherein the process includes the step of pyrolytically decomposing tetrabutyl titanate in a reaction chamber at a temperature at or near 450°C.

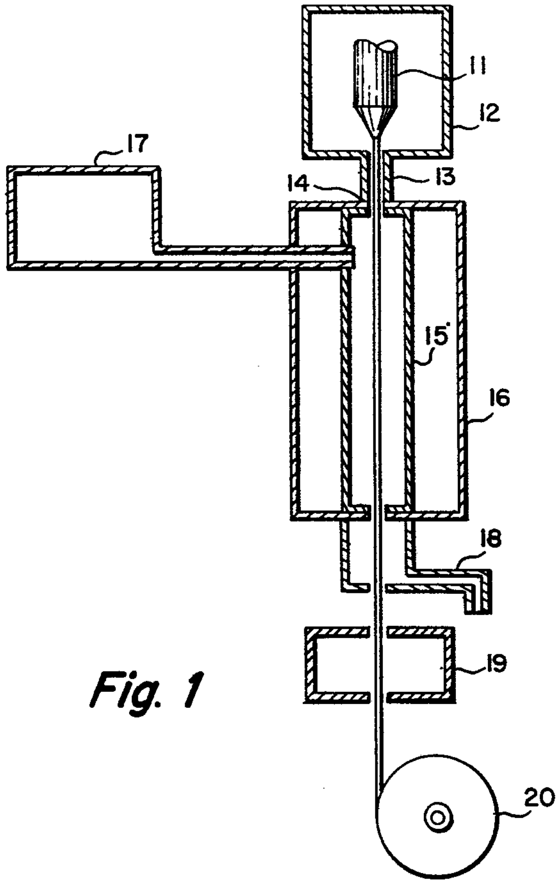


Fig. 1

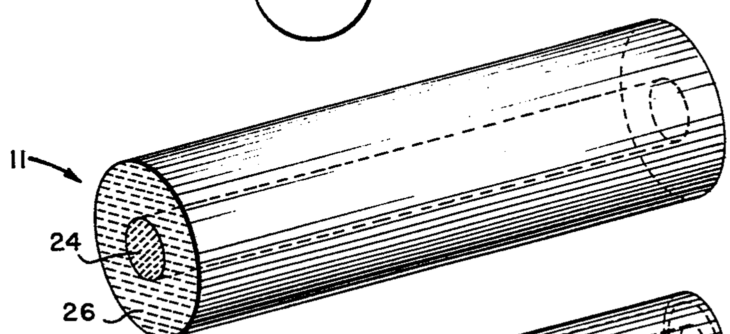


Fig. 2A

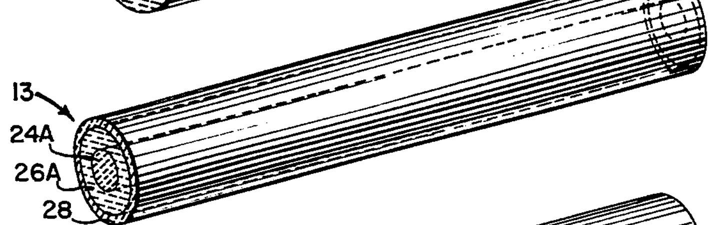


Fig. 2B

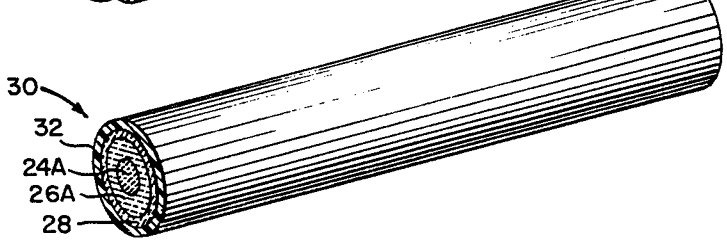


Fig. 2C

0128678

European Patent Office

# EUROPEAN SEARCH REPORT

Application number

EP 84 30 3318

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | AMERICAN CERAMIC SOCIETY BULLETIN, vol. 59, no. 8, August 1980 Columbus, Ohio (US) P. EHRBURGER et al.: "Effect of a Titania Coating on the Tensile Strength of Fused Silica Fiber", pages 844-847. * page 844, "Experimental" * | 1-2,7, 9,11-12,17, 19 | C 03 C 25/02 |
| X | CHEMICAL ABSTRACTS, vol. 89, no. 26, December 25, 1978, page 271, abstract no. 219732m Columbus, Ohio (US) & JP - A - 78 74 196 (MATSUSHITA ELECTRIC WORKS, Ltd.) (01-07-1978) * the whole abstract * | 1-2,8, 10,11-12,18, 20 | |
| | | | TECHNICAL FIELDS SEARCHED (Int. Cl. 3) |
| X | FR-A-2 320 915 (QUARTZ ET SILICE) * page 2, lines 2-7,26-29; page 3, line 33 to page 4, line 25; example 2 * | 1-20 | C 03 C 25/02 |

The present search report has been drawn up for all claims

| Place of search | Date of completion of the search | Examiner |
|---|---|---|
| THE HAGUE | 11-09-1984 | BOUTRUCHE J.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82